# EUROPÄISCHE PATENTSCHRIFT

(11) **EP 4 160 076 B1**
(45) Veröffentlichungstag und Bekanntmachung des Hinweises auf die Patenterteilung: **13.03.2024**
(21) Anmeldenummer: 21200424.6
(22) Anmeldetag: 01.10.2021
(51) Int. Cl.: F16P 1/02, F16P 3/08

(54) **VORRICHTUNG ZUM BE- UND/ODER VERARBEITEN VON PRODUKTEN**
APPARATUS FOR LOADING AND / OR PROCESSING PRODUCTS
DISPOSITIF DE TRAITEMENT DE PRODUITS

(43) Veröffentlichungstag der Anmeldung: 05.04.2023
(73) Patentinhaber: NORDISCHER MASCHINENBAU RUD. BAADER GMBH + CO KG, 23560 Lübeck (DE)
(72) Erfinder: Gottschalk, Roman Ludwig, 23560 Lübeck (DE); von Selle, André, 23560 Lübeck (DE)
(74) Vertreter: Stork Bamberger Patentanwälte PartmbB

(56) Entgegenhaltungen:
- EP-B1- 2 465 745
- BE-A- 722 695
- US-A- 2 835 226
- Parker Hannifin Gmbh: "Pneumatische Wegeventile, Serie VA13 und VA15, 3/2-, 5/2- u. 5/3 - Wegeventile, G1/8", Katalog PDE2617TCUK - V2 - Februar 2016, 28. Februar 2016 (2016-02-28), Seiten 1-8, XP055901737, Gefunden im Internet: URL:https://www.parker.com/literature/Pneu matics%20Division%20Europe/PDE-Documents/V alves/Parker_Pneumatik_VA_Pneumatische_Weg eventile_PDE2617TCDE.pdf [gefunden am 2022-03-15]

## Beschreibung

Die Erfindung befasst sich mit einer Vorrichtung, ausgebildet und eingerichtet zum Be- und/oder Verarbeiten von Produkten, umfassend ein Gehäuse mit einem Arbeitsraum zum Aufnehmen mindestens einer Bearbeitungsstation, mindestens eine Bearbeitungsstation innerhalb des Arbeitsraums, eine bewegbare Abdeckhaube zum Öffnen und Schließen des Gehäuses und Abdecken des Arbeitsraums gegenüber der Umgebung, wobei die oder jede Bearbeitungsstation mindestens ein pneumatisch betätigbares Werkzeug umfasst und das Werkzeug und die bewegbare Abdeckhaube mittels einer Sicherheitseinrichtung in Wirkverbindung stehen, derart, dass das Öffnen der Abdeckhaube zwangsläufig zum Außerbetriebsetzen des Werkzeugs führt.

Solche Vorrichtungen kommen in sehr unterschiedlichen Bereichen zum Einsatz, um das Bedienpersonal vor dem Eingriff in Betrieb befindlicher Werkzeuge zu schützen. Zum Be- und/oder Verarbeiten werden die Produkte wahlweise bei geöffneter Abdeckhaube in die Bearbeitungsstation eingesetzt oder die Produkte werden mittels einer Transporteinrichtung an die und durch die innerhalb des Gehäuses angeordnete Bearbeitungsstation transportiert. Während des Betriebs der Bearbeitungsstation ist das Gehäuse geschlossen. Dazu ist die Abdeckhaube in einer Schließstellung. Die Abdeckhaube, das kann auch jede andere Klappe, Tür oder Schutzvorrichtung sein, schirmt die Bearbeitungsstation während des laufenden Betriebs der Vorrichtung gegenüber der Umgebung gegen jeden Zugriff ab. Die geschlossene Abdeckhaube trennt die Bedienperson räumlich vom Arbeitsraum. Zu Zwecken z.B. der Wartung, Reinigung, Begutachtung der Produkte und/oder der Bearbeitungsstation ist jedoch ein Zugriff durch die Bedienperson in den Arbeitsraum erforderlich. Dazu ist die Abdeckhaube in eine geöffnete Zugriffsstellung zu klappen, schieben, schwenken oder anderweitig zu öffnen. Zur Vermeidung von Verletzungen darf ein Zugriff jedoch nur dann möglich sein, wenn die oder jede Bearbeitungsstation außer Betrieb gesetzt ist.

Dazu sind die Vorrichtungen derart gesichert, dass die oder jede Bearbeitungsstation außer Betrieb gesetzt wird, sobald die Werkzeuge frei zugänglich sind, also bei geöffneter Abdeckhaube. Ein klassischer Fall tritt dann auf, wenn eine Bedienperson die Abdeckhaube öffnet, um Zugriff auf den Innenraum der Vorrichtung, also in den Aufnahmeraum bzw. Arbeitsraum, zu erhalten, beispielsweise um Wartungsarbeiten vornehmen zu können oder um Produkte oder Teile davon aus der Vorrichtung zu entnehmen. Entsprechend sind Lösungen bekannt, bei denen das oder jedes durch die Abdeckhaube abgedeckte Werkzeug stillgelegt wird, sobald die Abdeckhaube geöffnet wird. Dazu ist eine Sicherungseinrichtung vorgesehen. Das oder jedes pneumatisch betriebene Werkzeug steht über die Sicherheitseinrichtung in Wirkverbindung mit der Abdeckhaube. Wird diese geöffnet, sorgt die Sicherheitseinrichtung dafür, dass die an den Werkzeugen anliegende Druckluft schnell entweichen kann, so dass die Werkzeuge funktionslos sind.

In bekannten Lösungen, insbesondere aus der nahrungsmittelverarbeitenden Industrie, wie z.B. der Geflügel- oder insbesondere der Fischverarbeitung, ist dafür eine Sicherheitseinrichtung bekannt, die einen Schaltmagneten und elektrisch betätigte Magnetventile umfasst, die mittels einer Steuerung aktiv gesteuert werden. Beim Öffnen der Abdeckhaube, das kann im Übrigen auch jede Schranktür, Revisionsklappe oder dergleichen sein, wird der Schaltmagnet ausgelöst, wodurch ein Signal an die Steuerung gesendet wird. Die Steuerung wiederum steuert die Magnetventile an, die je nach Situation öffnen oder schließen und dadurch das Entweichen der Druckluft aus den Werkzeugen ermöglichen. Mit anderen Worten werden die Magnetventile über komplexe Verschaltungen angesteuert, so dass beim Öffnen der Abdeckhaube beispielsweise die Zufuhr von Druckluft insbesondere an das oder jedes Werkzeug unterbrochen wird und gleichzeitig das Ablassen der an den Werkzeugen anliegenden Druckluft freigeschaltet wird. Die beschriebene Lösung weist zum einen eine Vielzahl von Bauteilen auf und erfordert eine komplexe Verschaltung. Zum anderen ist die Lebensdauer der genannten Bauteile, insbesondere der Magnetventile, begrenzt, da sie den in der Nahrungsmittelindustrie vorherrschenden Bedingungen nicht dauerhaft standhalten. Insbesondere in der fischverarbeitenden Industrie bildet das Wasser insbesondere für die Magnetventile und andere Schaltelemente und Komponenten eine störanfällige Umgebung. Da der Ausfall eines sicherheitsrelevanten Bauteils die Stilllegung der gesamten Vorrichtung zur Folge hat und die Fehlersuche aufwendig ist, wird die bekannte Lösung als nachteilig angesehen. Des Weiteren führen konstruktionsbedingte Toleranzen, z.B. Spaltmaße und Fertigungstoleranzen im Bereich des Schaltmagneten, immer wieder auch zu unerwünschten Abschaltungen der Vorrichtung.

Andere Sicherheitseinrichtungen mit Sicherheitsventilen sind u.a. aus einem Katalog "Pneumatische Wegeventile" der Firm Parker Hannifin GmbH, der US 2,835,226, der BE 722 695 A und der EP 2 465 745 B1 bekannt. Das letztgenannte Dokument beschreibt eine mechanische Betätigungsvorrichtung mit einem Hebel und einem ein Nockenprofil aufweisenden Nocken, wobei das Nockenprofil zwei Einkerbungen aufweist, die mit zwei Schaltstellungen des Hebels korrelieren.

Der Erfindung liegt somit die Aufgabe zugrunde, eine einfache und robuste Vorrichtung vorzuschlagen, die eine zuverlässige und langlebige Sicherheitsabschaltung insbesondere auch bei schwierigen Umgebungsverhältnissen gewährleistet.

Diese Aufgabe wird durch eine Vorrichtung der eingangs genannten Art dadurch gelöst, dass die Sicherheitseinrichtung ein Sicherheitsventil umfasst, das ausschließlich mechanisch schaltbar ausgebildet ist und dazu mindestens formschlüssig und/oder kraftschlüssig mit der Abdeckhaube in Wirkverbindung steht. Die Wirkverbindung zwischen der Abdeckhaube und dem Sicherheitsventil kann aber auch auf andere Weise, z.B. durch Stoffschluss oder durch kombinierten Stoff- und/oder Form- und/oder Kraftschluss hergestellt sein. Für die Erfindung wesentlich ist eine einfache und robuste Ausbildung der Sicherheitseinrichtung unter Verzicht auf elektrische und/oder elektronische Komponenten und Leitungen zur Reduzierung der Teilevielfalt einerseits und der Störanfälligkeit der Sicherheitseinrichtung andererseits. Dadurch, dass das Be- und Entlüften der Vorrichtung, also insbesondere auch das Schalten des Sicherheitsventils bei der Betätigung der Abdeckhaube durch ein rein mechanisches Sicherheitsventil erfolgt, ist die Vorrichtung einfach und robust aufgebaut und insbesondere für den Einsatz in der Nahrungsmittelindustrie einsetzbar. Die Reduzierung der Teilevielfalt und der Verzicht auf elektrische/elektronische Bauteile unterstützen diese Vorzüge. Ein weiterer Vorteil besteht darin, dass durch den einfachen Aufbau die Wartung der Vorrichtung wesentlich vereinfacht und dadurch verkürzt ist und auch durch weniger intensiv geschultes Bedienpersonal ausführbar ist.

Eine vorteilhafte Weiterbildung der Erfindung ist, dadurch gekennzeichnet, dass das Sicherheitsventil als 3/2-Wegeventil ausgebildet ist, wobei das Sicherheitsventil einen Luftzugang zum Zuführen von Druckluft in das Sicherheitsventil, einen Luftablass zum Ablassen von Druckluft aus dem Sicherheitsventil und einen Versorgungszugang zum Versorgen des oder jedes Werkzeugs mit Druckluft umfasst. Durch das Vorsehen von drei Druckluftöffnungen, nämlich Luftzugang, Luftablass und Versorgungszugang, einerseits und der Bereitstellung von zwei Strömungsverbindungen, nämlich zwischen Luftzugang und Versorgungszugang sowie zwischen Versorgungszugang und Luftablass, andererseits, ist eine kompakte und robuste Sicherheitseinrichtung geschaffen, die insbesondere auch unter extremen Umgebungsbedingungen zuverlässig und dauerhaft funktioniert. Die Strömungsverbindungen stellen Luftkammern dar bzw. werden durch diese bereitgestellt, in denen die Druckluft je nach Schaltungszustand des Sicherheitsventils in beide Richtungen strömen bzw. Druck auf- oder abbauen kann.

Besonders bevorzugt umfasst das Sicherheitsventil einen Hohlzylinder mit einem Hohlraum, in dem eine Schubstange gleitend geführt ist, wobei der Hohlzylinder an einer Stirnseite geschlossen und an der entgegengesetzten Stirnseite offen ausgebildet ist, derart, dass die Schubstange an der offenen Stirnseite aus dem Hohlzylinder ragt. Solche vorzugsweise zylindrisch geformten Hohlzylinder weisen eine Innenwand auf, die mindestens abschnittsweise über die Länge des Hohlzylinders beabstandet zur Schubstange ausgebildet ist, um so Luftkammern zur Bildung der Strömungsverbindungen zwischen den Druckluftöffnungen zu schaffen. Diese Ausbildung ermöglicht auf besonders einfache Weise eine rein mechanische Schaltung des Sicherheitsventils.

Vorteilhafterweise ist die Schubstange zur Bildung von Luftkammern mit ihrer Umfangsfläche grundsätzlich beabstandet zu einer Innenwand des Hohlzylinders angeordnet, wobei die Schubstange mindestens drei Dichtkörper umfasst, mit denen die Schubstange dichtend an der Innenwand des Hohlzylinders anliegt. Die Schubstange weist demnach in ihrer Längserstreckung unterschiedliche Querschnitte auf. In Bereichen von größeren Querschnitten, also Vorsprüngen/Erhebungen oder dergleichen der Schubstange sind z.B. einfache O-Ringe angeordnet, um den Hohlraum des Hohlzylinders in mehrere Luftkammern bzw. Abschnitte der Luftkammer unterteilen zu können, die die Strömungsverbindungen zwischen den einzelnen Druckluftöffnungen sicherstellen. Anstelle der O-Ringe sind aber auch andere Dichtkörper einsetzbar. Die Anzahl der Dichtkörper und deren Ausbildung und/oder Position kann auch variieren.

Zweckmäßigerweise münden der Luftzugang, der Luftablass und der Versorgungszugang in den Hohlraum des Hohlzylinders, wobei die Herstellung von Strömungsverbindungen zwischen Luftzugang und/oder Luftablass und/oder Versorgungszugang mittels der bewegbaren Schubstange variabel ist. Damit ist eine einfache, rein mechanische Schaltung der Sicherheitseinrichtung gewährleistet. Alleine durch das mechanische Verschieben der Schubstange innerhalb des Hohlzylinders sind die unterschiedlichen Strömungsverbindungen schaltbar.

Vorteilhafterweise ist der Abdeckhaube ein Betätigungshebel zugeordnet, der eine Kurvenscheibe umfasst, die mit der Schubstange, die dem Sicherheitsventil zugeordnet ist, in Wirkverbindung steht. Die Kurvenscheibe kann auch direkt der Abdeckhaube zugeordnet sein. Bevorzugt ist die Kurvenscheibe zusammen mit dem Betätigungshebel um eine Drehachse D drehbar. Durch die Kurvenbahn der Kurvenscheibe verändert sich aufgrund der Wirkverbindung zur Schubstange die Position der Schubstange innerhalb des Hohlzylinders. Mittels der Kurvenscheibe ist die Schubstange somit zur Schaltung der jeweiligen Strömungsverbindung hin und her schaltbar.

Zweckmäßigerweise ist die Schubstange mittels der Kurvenscheibe aus einer Arbeitsposition, in der die Abdeckhaube geschlossen ist und die Schubstange einerseits eine Strömungsverbindung zwischen dem Luftzugang und dem Versorgungszugang sicherstellt und andererseits den Luftablass sperrt, in eine Stoppposition, in der die Abdeckhaube geöffnet ist und die Schubstange einerseits eine Strömungsverbindung zwischen dem Versorgungszugang und dem Luftablass sicherstellt und andererseits den Luftzugang sperrt, und zurück bewegbar ausgebildet und eingerichtet. Die Kurvenbahn der Kurvenscheibe ist entsprechend ausgebildet, die beiden Extrempositionen der Schubstange, nämlich Arbeitsposition einerseits und Stoppposition andererseits, zu gewährleisten. In der Arbeitsposition schaltet die Schubstange diejenigen Luftkammern bzw. die Abschnitte der Luftkammer frei, die den ersten Luftweg zwischen Luftzugang und Versorgungszugang bilden, während der Luftablass gesperrt ist. Damit liegt Druckluft an den Werkzeugen an, so dass diese funktionsfähig und einsatzbereit sind. Ein Verlust von Druckluft über den Luftablass ist verhindert. In der Stoppposition schaltet die Schubstange diejenigen Luftkammern bzw. die Abschnitte der Luftkammer frei, die den zweiten Luftweg zwischen Versorgungszugang und Luftablass bilden, während der Luftzugang gesperrt ist. Damit kommt bei den Werkzeugen keine Druckluft mehr an. Im Gegenteil kann die Druckluft aus den Werkzeugen über den Luftablass entweichen, so dass die Werkzeuge drucklos sind und sich damit außer Betrieb befinden. Eine Verletzungsgefahr ist bei geöffneter Abdeckhaube somit sicher und zuverlässig ausgeschlossen. Die erfindungsgemäße Vorrichtung ist derart einfach und robust aufgebaut, dass unerwünschte Abschaltungen wirksam vermieden werden.

Eine besonders bevorzugte Weiterbildung ist dadurch gekennzeichnet, dass die Kurvenscheibe als geschlossene Kurvenscheibe zur Herstellung eines permanenten Formschlusses und/oder Kraftschlusses mit der Schubstange zum Schalten des Sicherheitsventils ausgebildet und eingerichtet ist. In der Kurvenscheibe ist eine langlochartige, geschlossene Kurvenbahn ausgebildet, die eine permanente Zwangsführung der Schubstange sicherstellt. Vorzugsweise ist dazu an einem aus dem Hohlzylinder hervorstehenden freien Ende der Schubstange ein Verbindungsbolzen angeordnet, der in der geschlossenen Kurvenbahn der Kurvenscheibe geführt ist. Der Verbindungsbolzen kann direkt vorzugsweise lösbar an der Schubstange bzw. an deren freiem Ende befestigt sein. Vorzugsweise ist das freie Ende der Schubstange an einem Verbindungskörper angeordnet, an dem wiederum der Verbindungsbolzen vorzugsweise lösbar befestigt ist. Durch das Drehen der Kurvenscheibe um die Drehachse D führt die Schubstange rein mechanisch ausgelöst eine Linearbewegung in den Hohlzylinder hinein (zur Stoppposition bei geöffneter Abdeckhaube) und aus dem Hohlzylinder heraus (zur Arbeitsposition bei geschlossener Abdeckhaube) aus.

Vorteilhafterweise sind der Luftzugang und der Luftablass in Längsrichtung des Hohlzylinders hintereinander angeordnet, wobei der Luftablass näher an der offenen Stirnseite des Hohlzylinders angeordnet ist. Diese Anordnung ermöglicht mit einfachen Linearbewegungen das Freischalten der jeweiligen Strömungsverbindungen. Dadurch, dass der Luftzugang in Richtung der geschlossenen Stirnseite des Hohlzylinders angeordnet ist, lässt sich die Stoppposition der Schubstange auf besonders einfache Weise rein mechanisch erreichen.

Zweckmäßigerweise sind der Luftzugang und der Luftablass in Längsrichtung des Hohlzylinders beabstandet zueinander, wobei der Abstand ausreichend groß ist, derart, dass der Versorgungszugang zwischen dem Luftzugang und dem Luftablass angeordnet und ausgebildet ist. Damit sind extrem kurze Schaltwege zwischen den einzelnen Strömungsverbindungen realisiert, so dass eine präzise und zuverlässige Schaltung der Schubstange in die beiden Positionen, nämlich Arbeitsposition und Stoppposition, gewährleistet ist.

Eine bevorzugte Ausführungsform ist dadurch gekennzeichnet, dass der Luftzugang und der Luftablass einerseits und der Versorgungszugang andererseits radial gesehen auf entgegengesetzten Seiten des Hohlzylinders angeordnet sind. Durch diese Anordnung, Luftzugang und Luftablass auf der einen Seite und Versorgungszugang auf der entgegengesetzten Seite, werden die vorstehend genannten Vorteile weiter gestützt, und zwar in einer sehr kompakten Bauweise.

Eine besonders vorteilhafte Weiterbildung zeichnet sich dadurch aus, dass dem Sicherheitsventil ein Federelement zugeordnet ist, wobei das Federelement derart eingerichtet und angeordnet ist, dass es die Schubstange mit einer Federkraft nach innen in den Hohlzylinder in Richtung der Stoppposition drückt. Die Anordnung und Ausrichtung des Federelementes sorgt demnach dafür, dass auf der Schubstange ein permanenter Druck in Richtung der Stoppposition lastet. Wenn also z.B. die Verbindung zwischen Schubstange und Kurvenscheibe bricht/reißt, sorgt das Federelement dafür, dass die Schubstange unmittelbar in ihre Stoppposition bewegt wird. Damit ist eine zweite Sicherheitsstufe geschaffen, die Werkzeuge funktionslos zu schalten, wenn die Abdeckhaube geöffnet wird und die erste Sicherheitsstufe mittels der Wirkverbindung zwischen Abdeckhaube bzw. Kurvenscheibe und Schubstange funktionslos ist.

Vorteilhafterweise ist im Bereich der offenen Stirnseite des Hohlzylinders eine Druckfeder angeordnet, die an einem Vorsprung der Schubstange anliegt, derart, dass ein permanenter Federdruck an der Schubstange in Richtung der geschlossenen Stirnseite des Hohlzylinders anliegt. Damit drückt das Federelement die Schubstange gegen den Hohlzylinder als Gegenlager in die Stoppposition für den Fall, dass die Wirkverbindung zwischen Kurvenscheibe und Schubstange unterbrochen ist. Damit ist eine kompakte und zuverlässige zweite Sicherheitsstufe realisiert.

Eine weitere vorteilhafte Ausführungsform ist dadurch gekennzeichnet, dass in der Arbeitsposition innerhalb einer Luftkammer in der Strömungsverbindung zwischen dem Luftzugang und dem Versorgungszugang ein Luftdruck anliegt, der die Schubstange mit einer Druckkraft beaufschlagt, die nach innen in den Hohlzylinder in Richtung der Stoppposition gerichtet ist. Einfach ausgedrückt arbeitet der Druck aus den Werkzeugen bzw. der an den Werkzeugen anliegende Druck gegen die Arbeitsposition. Mit anderen Worten stellen die gewählten Druckverhältnisse innerhalb der Luftkammern sicher, dass für den Fall, dass sowohl die erste Sicherheitsstufe, nämlich die Wirkverbindung zwischen Kurvenscheibe und Schubstange, versagt, als auch die zweite Sicherheitsstufe, nämlich das Federelement, versagt, die Schubstange alleine durch den Luftdruck in der Luftkammer zur Bildung des Luftströmungskanals zwischen Luftzugang und Versorgungszugang in ihre Stoppposition bewegt wird. Damit ist eine dritte Sicherheitsstufe geschaffen, die Werkzeuge funktionslos zu schalten, wenn die Abdeckhaube geöffnet wird und die erste Sicherheitsstufe mittels der Wirkverbindung zwischen Abdeckhaube bzw. Kurvenscheibe und Schubstange funktionslos ist und auch die zweite Sicherheitsstufe durch das Federelement versagt.

Weitere zweckmäßige und/oder vorteilhafte Merkmale und Weiterbildungen zu der Vorrichtung ergeben sich aus den Unteransprüchen und der Beschreibung. Besonders bevorzugte Ausführungsformen werden anhand der beigefügten Zeichnung näher erläutert. In der Zeichnung zeigt:
- Fig. 1: eine schematische Darstellung einer erfindungsgemäßen Vorrichtung mit einem mechanisch schaltbaren Sicherheitsventil als Bestandteil einer Sicherheitseinrichtung in perspektivischer Ansicht,
- Fig. 2: eine schematische Darstellung von Teilen der Vorrichtung gemäß Figur 1 in einer Schließstellung der Abdeckhaube,
- Fig. 3: eine Vorderansicht von Teilen der Vorrichtung gemäß Figur 2 im Schnitt,
- Fig. 4: eine schematische Darstellung von Teilen der Vorrichtung gemäß Figur 1 in einer Zugriffsstellung der Abdeckhaube, und
- Fig. 5: eine Vorderansicht von Teilen der Vorrichtung gemäß Figur 4 im Schnitt.

Die in der Zeichnung dargestellte Vorrichtung ist zum Be- und/oder Verarbeiten von Fischen oder Teilen davon ausgebildet und eingerichtet und umfasst eine mehrstufige, erfindungsgemäße Sicherheitseinrichtung. Die Erfindung betrifft in entsprechender Weise auch Vorrichtungen zum Be- und/oder Verarbeiten anderer Produkte aus der nahrungsmittelverarbeitenden Industrie und der Genussmittelindustrie und allen anderen industriellen Bereichen, in denen die Bedienpersonen vor dem Eingriff in betriebsbereite Werkzeuge geschützt werden. Die Erfindung bezieht sich des Weiteren auch auf Vorrichtungen mit nur einer einzelnen Sicherheitsstufe oder mit zwei Sicherheitsstufen.

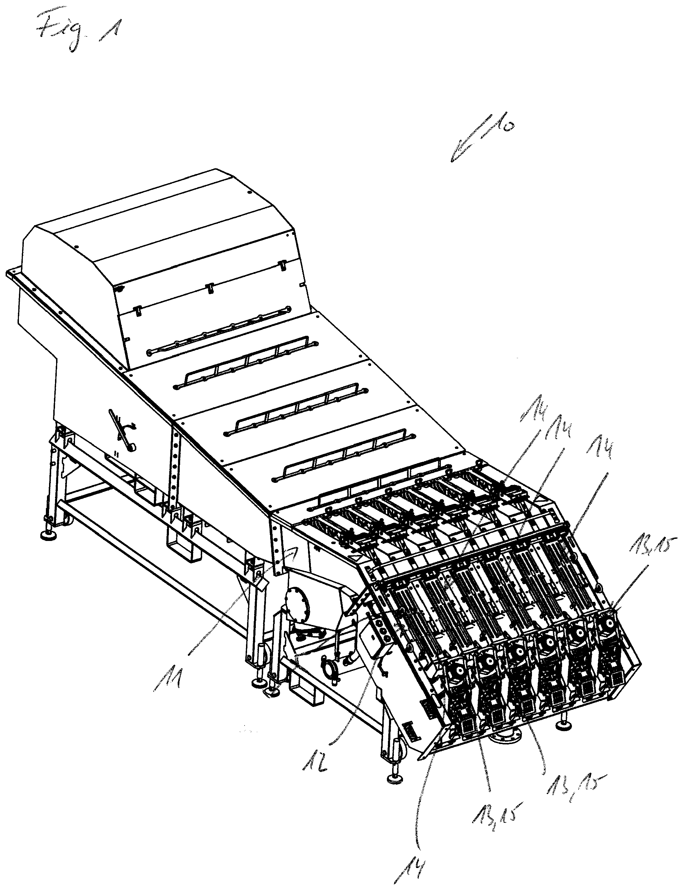

In der Zeichnung gemäß Figur 1 ist eine Vorrichtung 10 dargestellt, die zum Be- und/oder Verarbeiten von Produkten ausgebildet und eingerichtet ist. Die Vorrichtung 10 umfasst ein Gehäuse 11 mit einem Arbeitsraum 12 zum Aufnehmen mindestens einer Bearbeitungsstation 13, mindestens eine Bearbeitungsstation 13 innerhalb des Arbeitsraums 12, eine bewegbare Abdeckhaube 14 zum Öffnen und Schließen des Gehäuses 11 und Abdecken des Arbeitsraums 12 gegenüber der Umgebung U, wobei die oder jede Bearbeitungsstation 13 mindestens ein pneumatisch betätigbares Werkzeug 15 umfasst und das Werkzeug 15 und die bewegbare Abdeckhaube 14 mittels einer Sicherheitseinrichtung 16 in Wirkverbindung stehen, derart, dass das Öffnen der Abdeckhaube 14 zwangsläufig zum Außerbetriebsetzen des Werkzeugs 15 führt. Durch das Öffnen der Abdeckhaube 14 wird das oder jedes Werkzeug 15 abgestellt.

Diese Vorrichtung 10 ist erfindungsgemäß dadurch gekennzeichnet, dass die Sicherheitseinrichtung 16 ein Sicherheitsventil 17 umfasst, das ausschließlich mechanisch schaltbar ausgebildet ist und dazu mindestens formschlüssig und/oder kraftschlüssig mit der Abdeckhaube 14 in Wirkverbindung steht. Die Wirkverbindung zwischen dem Sicherheitsventil 17 und der Abdeckhaube 14 oder Teilen derselben bildet eine erste Sicherheitsstufe, um die Bedienperson gegen den Eingriff in ein funktionsbereites Werkzeug 15 zu schützen. Sobald die Abdeckhaube 14 geöffnet wird, fällt die Druckluft von dem oder jedem Werkzeug 15 ab, so dass dieses - für die Bedienperson ungefährlich - dann funktionslos sind.

Die im Folgenden beschriebenen Merkmale und Weiterbildungen stellen für sich betrachtet oder in Kombination miteinander bevorzugte Ausführungsformen der Vorrichtung 10 dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

Das Gehäuse 11 kann eine vollständig geschlossene Konstruktion mit einer oder mehreren Bearbeitungsstationen 13 sein. Das Gehäuse 11 kann auch eine Rahmenstruktur aufweisen, bei der die oder jede Bearbeitungsstation 13 sicher gegen einen Eingriff in ein funktionsbereites Werkzeug 15 gesichert ist, vorzugsweise durch eine klapp- oder schwenkbare Abdeckhaube 14, Klappe, Tür oder dergleichen. In dem oder durch das Gehäuse 11 kann auch ein Transportelement, beispielsweise eine Transportkette oder ein Förderband, geführt sein, mit der/dem die Produkte in den Wirkbereich des oder jedes Werkzeugs 15 transportiert werden.

Die Wirkverbindung zwischen dem Sicherheitsventil 17 und der Abdeckhaube 14 kann durch Formschluss und/oder Kraftschluss hergestellt sein. Bevorzugt ist eine kombinierte form- und kraftschlüssige Wirkverbindung vorgesehen. In anderen Ausführungen sind selbstverständlich auch stoffschlüssige Wirkverbindungen umsetzbar.

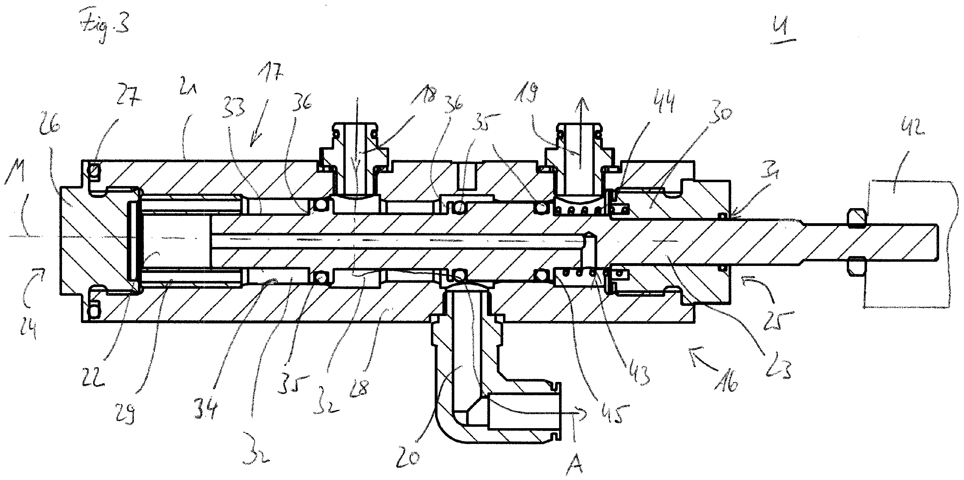

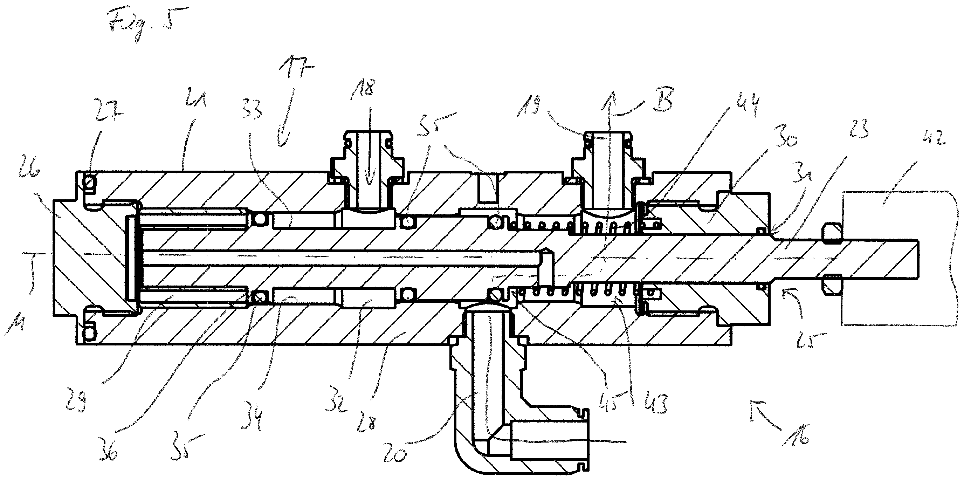

In der gezeigten Ausführungsform ist das Sicherheitsventil 17 als 3/2-Wegeventil ausgebildet. Das Sicherheitsventil 17 weist drei Druckluftöffnungen auf, nämlich einen Luftzugang 18 zum Zuführen von Druckluft in das Sicherheitsventil 17, einen Luftablass 19 zum Ablassen von Druckluft aus dem Sicherheitsventil 17 und einen Versorgungszugang 20 zum Versorgen des oder jedes Werkzeugs 15 mit Druckluft. Der Luftzugang 18 ist an eine Einrichtung zum Erzeugen und/oder Weiterleiten von Druckluft angeschlossen, die dann über den Luftzugang 18 in das Sicherheitsventil 17 geleitet wird. Der Luftablass 19 dient zur Ableitung und/oder Rückführung von Druckluft aus dem Sicherheitsventil 17. Der Versorgungszugang 20 führt vom Sicherheitsventil 17 zu dem oder jedem Werkzeug 15 der Bearbeitungsstation 13 und ist je nach Schaltstellung des Sicherheitsventils 17 mit dem Luftzugang 18 oder dem Luftablass 19 koppelbar, wodurch zwei unterschiedliche (durch Pfeile A und B in den Figuren 3 und 5 angedeutet) Strömungsverbindungen/Luftwege erzeugbar sind. In der Schaltstellung, in der der Luftzugang 18 mit dem Versorgungszugangs 20 über Luftkammern zur Bildung der Strömungsverbindung verbunden ist, liegt am Versorgungszugang 20 ein Luftdruck an, der das oder jedes Werkzeug 15 funktionsbereit hält. In der Schaltstellung, in der der Versorgungszugang 20 mit dem Luftablass 19 verbunden ist, entweicht die am und in den Werkzeugen 15 befindliche Druckluft vorzugsweise in die Umgebung U, so dass das oder jedes Werkzeug 15 funktionslos ist.

Das Sicherheitsventil 17 umfasst einen Hohlzylinder 21 mit einem Hohlraum 22, in dem eine Schubstange 23 gleitend geführt ist, wobei der Hohlzylinder 21 an einer Stirnseite 24 geschlossen und an der entgegengesetzten Stirnseite 25 offen ausgebildet ist, derart, dass die Schubstange 23 an der offenen Stirnseite 25 aus dem Hohlzylinder 21 ragt. Der Hohlkörper 21 kann einstückig ausgebildet sein. Bevorzugt umfasst der Hohlkörper 21 jedoch mehrere Teile. In der gezeigten Ausführungsform ist der Hohlkörper 21 an der geschlossenen Stirnseite 24 durch ein Deckelelement 26 druckluftdicht geschlossen. Das Deckelelement 26 ist beispielsweise mittels eines Dichtrings 27 gegenüber einer Wandung 28 des zylindrisch geformten Hohlkörpers 21 gedichtet und lösbar mit der Wandung 28 verbunden. Nach innen - dem Hohlraum 22 zugewandt - weist das Deckelelement 26 ein Führungselement 29 auf, das dem Deckelelement 26 auch separat zugeordnet sein kann. Das Führungselement 29 ist zum Führen eines ersten freien Endes der Schubstange 23 innerhalb des Hohlzylinders 21 ausgebildet und eingerichtet. An der offenen Stirnseite 25 des Hohlzylinders 21 ist ebenfalls ein Führungselement 30 angeordnet, das zum Führen des entgegengesetzten Endes der Schubstange 23 innerhalb des Hohlzylinders 21 ausgebildet und eingerichtet ist und eine Durchgangsöffnung 31 aufweist, durch die die Schubstange 23 aus dem Hohlzylinder 21 ragt.

Die Schubstange 23 ist zur Bildung von Luftkammern 32 mit ihrer Umfangsfläche 33 grundsätzlich beabstandet zu einer Innenwand 34 des Hohlzylinders 21 angeordnet, wobei die Schubstange 23 mindestens drei Dichtkörper 35 umfasst, mit denen die Schubstange 23 dichtend an der Innenwand 33 des Hohlzylinders 21 anliegt. Die Dichtkörper 35 sind in Vorsprüngen 36 der Schubstange 23 angeordnet, die sich radial nach außen erstrecken. Dadurch bilden sich zwischen der Umfangsfläche 33 der Schubstange 23 und der Innenwand 34 des Hohlzylinders 21 mehrere Luftkammerabschnitte der Luftkammer 32, die durch das Schalten der Schubstange 23, also das Verschieben der Schubstange 23 innerhalb des Hohlzylinders 21, zur Bildung der Strömungsverbindungen bzw. Luftwege wechselweise miteinander verbindbar sind. Der Luftzugang 18, der Luftablass 19 und der Versorgungszugang 20 münden in den Hohlraum 22 des Hohlzylinders 21, wobei die Herstellung von Strömungsverbindungen zwischen Luftzugang 18 und/oder Luftablass 19 und/oder Versorgungszugang 20 mittels der bewegbaren Schubstange 23 variabel ist.

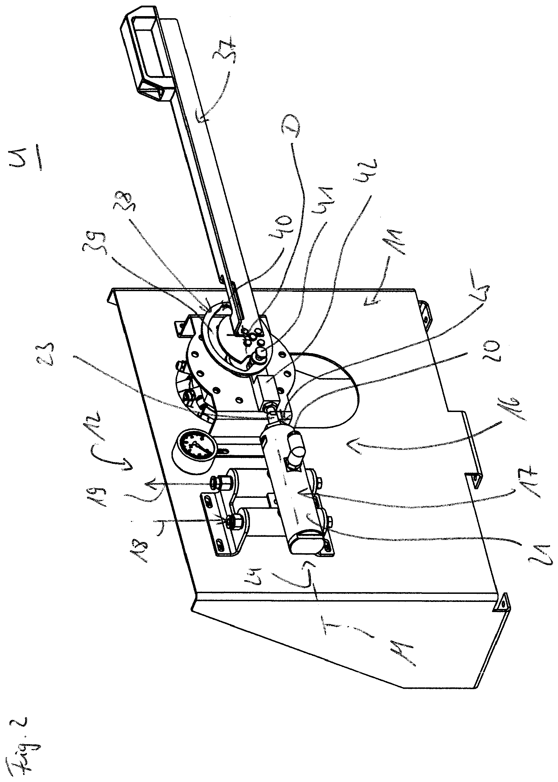

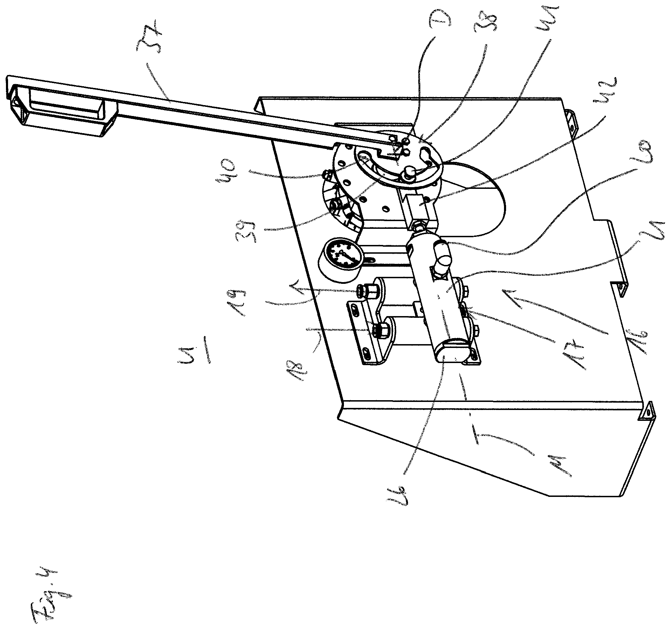

Die Wirkverbindung zwischen dem Sicherheitsventil 17 bzw. der Schubstange 23 des Sicherheitsventils 17 einerseits und der Abdeckhaube 14 andererseits kann direkt hergestellt sein. Vorzugswese ist der Abdeckhaube 14 ein Betätigungshebel 37 zugeordnet, der eine Kurvenscheibe 38 umfasst, die mit der Schubstange 23, die dem Sicherheitsventil 17 zugeordnet ist, in Wirkverbindung steht. Mittels des Betätigungshebels 37 sind die Abdeckhaube 14 sowie die Kurvenscheibe 38 vorzugsweise synchron bewegbar. Die Rotation erfolgt um eine Drehachse D. Durch die Wirkverbindung zwischen Kurvenscheibe 38 und Schubstange 23 wird letztere durch die Rotation der Kurvenscheibe 38 zu einer Linearbewegung gezwungen. Genauer ist die Schubstange 23 mittels der Kurvenscheibe 38 aus einer Arbeitsposition, in der die Abdeckhaube 14 geschlossen ist und die Schubstange 23 einerseits eine Strömungsverbindung zwischen dem Luftzugang 18 und dem Versorgungszugang 20 sicherstellt und andererseits den Luftablass 19 sperrt (siehe hierzu insbesondere Figuren 2 und 3), in eine Stoppposition, in der die Abdeckhaube 14 geöffnet ist und die Schubstange 23 einerseits eine Strömungsverbindung zwischen dem Versorgungszugang 20 und dem Luftablass 19 sicherstellt und andererseits den Luftzugang 18 sperrt (siehe hierzu insbesondere die Figuren 4 und 5), und zurück bewegbar ausgebildet und eingerichtet.

Die Form und der Verlauf einer Stellkurve 39 kann variieren. Die Stellkurve 39 kann u.a. an der äußeren Umfangsfläche der Kurvenscheibe 38 ausgebildet sein. Bevorzugt ist die Kurvenscheibe 38 als geschlossene Kurvenscheibe 38 zur Herstellung eines permanenten Formschlusses und/oder Kraftschlusses mit der Schubstange 23 zum Schalten des Sicherheitsventils 17 ausgebildet und eingerichtet. Die Stellkurve 39 ist eine gebogene Kurvenbahn 40 in der Kurvenscheibe 38, die vorzugsweise exzentrisch zur Drehachse D gelagert ist. An einem aus dem Hohlzylinder 21 hervorstehenden freien Ende der Schubstange 23 ist ein Verbindungsbolzen 41 angeordnet, der in der geschlossenen Kurvenbahn 40 der Kurvenscheibe 38 geführt ist. Der Verbindungsbolzen 41 kann direkt vorzugsweise lösbar an der Schubstange 23 bzw. an deren Ende befestigt sein. Vorzugsweise ist das Ende der Schubstange 23 an einem Verbindungskörper 42 angeordnet, an dem wiederum der Verbindungsbolzen 41 vorzugsweise lösbar befestigt ist.

Wie insbesondere den Figuren 3 und 5 zu entnehmen, sind der Luftzugang 18 und der Luftablass 19 in Längsrichtung des Hohlzylinders 21 - entlang dessen Mittelachse M - hintereinander angeordnet, wobei der Luftablass 19 näher an der offenen Stirnseite 25 des Hohlzylinders 21 angeordnet ist. Anders ausgedrückt befindet sich der Luftzugang 18 tiefer im Hohlzylinder 21 in Richtung der geschlossenen Stirnseite 24 des Hohlzylinders 21. Vorzugsweise verlaufen der Luftzugang 18 und der Luftablass 19 parallel zueinander und münden beabstandet zueinander in den Hohlraum 22 bzw. in die entsprechenden Abschnitte der Luftkammer 32. Der Luftzugang 18 und der Luftablass 19 sind in Längsrichtung des Hohlzylinders 21 beabstandet zueinander, wobei der Abstand ausreichend groß ist, derart, dass der Versorgungszugang 20 zwischen dem Luftzugang 18 und dem Luftablass 19 angeordnet und ausgebildet ist. Die einzelnen Druckluftöffnungen sind jedoch soweit zueinander beabstandet, dass eine Überlappung derselben ausgeschlossen ist. Dabei sind der Luftzugang 18 und der Luftablass 19 einerseits und der Versorgungszugang 20 andererseits radial gesehen auf entgegengesetzten Seiten des Hohlzylinders 21 angeordnet. Selbstverständlich sind die Positionen von Luftzugang 18, Luftablass 19 und Versorgungszugang 20 entlang der Mittelachse M sowie zueinander variabel.

In der bevorzugten Ausführungsform ist dem Sicherheitsventil 17 ein Federelement 43 zugeordnet, wobei das Federelement 43 derart eingerichtet und angeordnet ist, dass es die Schubstange 23 mit einer Federkraft nach innen in den Hohlzylinder 21 in Richtung der Stoppposition drückt. Vorzugsweise ist im Bereich der offenen Stirnseite 25 des Hohlzylinders 21 eine Druckfeder 44 angeordnet, die an einem Vorsprung 45 der Schubstange 23 anliegt, derart, dass ein permanenter Federdruck an der Schubstange 23 in Richtung der geschlossenen Stirnseite 24 des Hohlzylinders 21 anliegt. Die Druckfeder 44 drückt sich z.B. gegen den Hohlzylinder 21 bzw. gegen eine Wandung 28 desselben als Gegenlager ab. In der dargestellten Ausführungsform ist die Druckfeder 44 dem Führungselement 30 im Bereich der offenen Stirnwand 25 des Hohlzylinders 21 zugeordnet. Anstelle einer einzelnen Druckfeder 44 können auch Federpakete vorgesehen sein.

In der Arbeitsposition der Schubstange 23 liegt innerhalb einer Luftkammer 32 in der Strömungsverbindung zwischen dem Luftzugang 18 und dem Versorgungszugang 20 ein Luftdruck an, der die Schubstange 23 mit einer Druckkraft beaufschlagt, die nach innen in den Hohlzylinder 21 in Richtung der Stoppposition gerichtet ist.

Ausgehend von einer geschlossenen Abdeckhaube 14 (siehe insbesondere Figuren 2 und 3) steht die Schubstange 23 in einer Position, in der die Strömungsverbindung zwischen Luftzugang 18 und Versorgungszugang 20 freigeschaltet ist. Somit liegt Druckluft in dem Abschnitt der Luftkammer 32 und somit an dem oder jedem Werkzeug 15 an, wodurch die Werkzeuge 15 funktionsbereit sind. Mit dem Öffnen der Abdeckhaube 14 (siehe insbesondere Figuren 4 und 5) wird auch die Kurvenscheibe 38 bewegt, die ihrerseits die Schubstange 23 schaltet, und zwar in eine Position, in der die Strömungsverbindung zwischen Versorgungszugang 20 und Luftablass 19 freigeschaltet ist. Dadurch, dass der Luftzugang 18 gesperrt ist, also keine weitere Druckluft zugeführt werden kann, entweicht die Druckluft aus dem Abschnitt der Luftkammer 32, der die Strömungsverbindung zwischen Versorgungszugang 20 und Luftablass 19 darstellt. Die Druckluft entweicht aus der Luftkammer 32 und aus dem oder jedem Werkzeug 15, so dass dieses funktionslos ist.

Die Wirkverbindung zwischen Sicherheitsventil 17 und Abdeckhaube 14 stellt als erste Sicherheitsstufe sicher, dass das oder jedes Werkzeug 15 beim Öffnen der Abdeckhaube 14 - wie vorstehend beschrieben - funktionslos geschaltet ist. Sollte die erste Sicherheitsstufe versagen, greift die zweite Sicherheitsstufe in Form des Federelementes 43, das dafür sorgt, das bei fehlender Wirkverbindung von Sicherheitsventil 17 und Abdeckhaube 14 die Schubstange 23 in die Stoppposition zum Abschalten des oder jedes Werkzeugs 15 bewegt wird. Sollte auch diese zweite Sicherheitsstufe versagen, greift die dritte Sicherheitsstufe, indem das Druckniveau innerhalb der Luftkammer 32 in der Strömungsverbindung zwischen dem Versorgungszugang 20 und dem Luftzugang 18 dafür sorgt, dass die Schubstange 23 in die Stoppposition zum Abschalten des oder jedes Werkzeugs 15 bewegt wird.

## Patentansprüche

1. Vorrichtung (10), ausgebildet und eingerichtet zum Be- und/oder Verarbeiten von Produkten, umfassend ein Gehäuse (11) mit einem Arbeitsraum (12) zum Aufnehmen mindestens einer Bearbeitungsstation (13), mindestens eine Bearbeitungsstation (13) innerhalb des Arbeitsraums (12), eine bewegbare Abdeckhaube (14) zum Öffnen und Schließen des Gehäuses (11) und Abdecken des Arbeitsraums (12) gegenüber der Umgebung (U), wobei die oder jede Bearbeitungsstation (13) mindestens ein pneumatisch betätigbares Werkzeug (15) umfasst und das Werkzeug (15) und die bewegbare Abdeckhaube (14) mittels einer Sicherheitseinrichtung (16) in Wirkverbindung stehen, derart, dass das Öffnen der Abdeckhaube (14) zwangsläufig zum Außerbetriebsetzen des Werkzeugs (15) führt, **dadurch gekennzeichnet, dass** die Sicherheitseinrichtung (16) ein Sicherheitsventil (17) umfasst, das ausschließlich mechanisch schaltbar ausgebildet ist und dazu mindestens formschlüssig und/oder kraftschlüssig mit der Abdeckhaube (14) in Wirkverbindung steht.

2. Vorrichtung (10) nach Anspruch 1, **dadurch gekennzeichnet, dass** das Sicherheitsventil (17) als 3/2-Wegeventil ausgebildet ist, wobei das Sicherheitsventil (17) einen Luftzugang (18) zum Zuführen von Druckluft in das Sicherheitsventil (17), einen Luftablass (19) zum Ablassen von Druckluft aus dem Sicherheitsventil (17) und einen Versorgungszugang (20) zum Versorgen des oder jedes Werkzeugs (15) mit Druckluft umfasst.

3. Vorrichtung (10) nach Anspruch 1 oder 2, **dadurch gekennzeichnet, dass** das Sicherheitsventil (17) einen Hohlzylinder (21) mit einem Hohlraum (22) umfasst, in dem eine Schubstange (23) gleitend geführt ist, wobei der Hohlzylinder (21) an einer Stirnseite (24) geschlossen und an der entgegengesetzten Stirnseite (25) offen ausgebildet ist, derart, dass die Schubstange (23) an der offenen Stirnseite (25) aus dem Hohlzylinder (21) ragt.

4. Vorrichtung (10) nach Anspruch 3, **dadurch gekennzeichnet, dass** die Schubstange (23) zur Bildung von Luftkammern (32) mit ihrer Umfangsfläche (33) grundsätzlich beabstandet zu einer Innenwand (34) des Hohlzylinders (21) angeordnet ist, wobei die Schubstange (23) mindestens drei Dichtkörper (35) umfasst, mit denen die Schubstange (23) dichtend an der Innenwand (34) des Hohlzylinders (21) anliegt.

5. Vorrichtung (10) nach Anspruch 3 oder 4, **dadurch gekennzeichnet, dass** der Luftzugang (18), der Luftablass (19) und der Versorgungszugang (20) in den Hohlraum (22) des Hohlzylinders (21) münden, wobei die Herstellung von Strömungsverbindungen zwischen Luftzugang (18) und/oder Luftablass (19) und/oder Versorgungszugang (20) mittels der bewegbaren Schubstange (23) variabel ist.

6. Vorrichtung (10) nach einem oder mehreren der Ansprüche 3 bis 5, **dadurch gekennzeichnet, dass** der Abdeckhaube (14) ein Betätigungshebel (37) zugeordnet ist, der eine Kurvenscheibe (38) umfasst, die mit der Schubstange (23), die dem Sicherheitsventil (17) zugeordnet ist, in Wirkverbindung steht.

7. Vorrichtung (10) nach Anspruch 6, **dadurch gekennzeichnet, dass** die Schubstange (23) mittels der Kurvenscheibe (38) aus einer Arbeitsposition, in der die Abdeckhaube (14) geschlossen ist und die Schubstange (23) einerseits eine Strömungsverbindung zwischen dem Luftzugang (18) und dem Versorgungszugang (20) sicherstellt und andererseits den Luftablass (19) sperrt, in eine Stoppposition, in der die Abdeckhaube (14) geöffnet ist und die Schubstange (23) einerseits eine Strömungsverbindung zwischen dem Versorgungszugang (20) und dem Luftablass (19) sicherstellt und andererseits den Luftzugang (18) sperrt, und zurück bewegbar ausgebildet und eingerichtet ist.

8. Vorrichtung (10) nach Anspruch 6 oder 7, **dadurch gekennzeichnet, dass** die Kurvenscheibe (38) als geschlossene Kurvenscheibe (38) zur Herstellung eines permanenten Formschlusses und/oder Kraftschlusses mit der Schubstange (23) zum Schalten des Sicherheitsventils (17) ausgebildet und eingerichtet ist.

9. Vorrichtung (10) nach einem oder mehreren der Ansprüche 6 bis 8, **dadurch gekennzeichnet, dass** an einem aus dem Hohlzylinder (21) hervorstehenden freien Ende der Schubstange (23) ein Verbindungsbolzen (41) angeordnet ist, der in einer geschlossenen Kurvenbahn (40) der Kurvenscheibe (38) geführt ist.

10. Vorrichtung (10) nach einem oder mehreren der Ansprüche 3 bis 9, **dadurch gekennzeichnet, dass** der Luftzugang (18) und der Luftablass (19) in Längsrichtung des Hohlzylinders (21) hintereinander angeordnet sind, wobei der Luftablass (19) näher an der offenen Stirnseite (25) des Hohlzylinders (21) angeordnet ist.

11. Vorrichtung (10) nach einem oder mehreren der Ansprüche 2 bis 10, **dadurch gekennzeichnet, dass** der Luftzugang (18) und der Luftablass (19) in Längsrichtung des Hohlzylinders (21) beabstandet zueinander sind, wobei der Abstand ausreichend groß ist, derart, dass der Versorgungszugang (20) zwischen dem Luftzugang (18) und dem Luftablass (19) angeordnet und ausgebildet ist.

12. Vorrichtung (10) nach einem oder mehreren der Ansprüche 2 bis 11, **dadurch gekennzeichnet, dass** der Luftzugang (18) und der Luftablass (19) einerseits und der Versorgungszugang (20) andererseits radial gesehen auf entgegengesetzten Seiten des Hohlzylinders (21) angeordnet sind.

13. Vorrichtung (10) nach einem oder mehreren der Ansprüche 7 bis 12, **dadurch gekennzeichnet, dass** dem Sicherheitsventil (17) ein Federelement (43) zugeordnet ist, wobei das Federelement (43) derart eingerichtet und angeordnet ist, dass es die Schubstange (23) mit einer Federkraft nach innen in den Hohlzylinder (21) in Richtung der Stoppposition drückt.

14. Vorrichtung (10) nach Anspruch 13, **dadurch gekennzeichnet, dass** im Bereich der offenen Stirnseite (25) des Hohlzylinders (21) eine Druckfeder (44) angeordnet ist, die an einem Vorsprung (45) der Schubstange (23) anliegt, derart, dass ein permanenter Federdruck an der Schubstange (23) in Richtung der geschlossenen Stirnseite (24) des Hohlzylinders (21) anliegt.

15. Vorrichtung (10) nach einem oder mehreren der Ansprüche 7 bis 14, **dadurch gekennzeichnet, dass** in der Arbeitsposition innerhalb einer Luftkammer (32) in der Strömungsverbindung zwischen dem Luftzugang (18) und dem Versorgungszugang (20) ein Luftdruck anliegt, der die Schubstange (23) mit einer Druckkraft beaufschlagt, die nach innen in den Hohlzylinder (21) in Richtung der Stoppposition gerichtet ist.

## Claims

1. Apparatus (10) configured and adapted for working and/or processing products, comprising a housing (11) having a work area (12) for accommodating at least one working station (13), at least one working station (13) within the work area (12), a movable cover (14) for opening and closing the housing (11) and covering the work area (12) with respect to the surroundings (U), the or each working station (13) comprising at least one pneumatically actuatable tool (15), and the tool (15) and the movable cover (14) being operatively connected by means of a safety device (16) in such a way that the opening of the cover (14) inevitably leads to the tool (15) being stopped, **characterised in that** the safety device (16) comprises a safety valve (17) that is configured to be switchable solely in a mechanical manner and, for that purpose, is operatively connected to the cover (14) at least in an form-fitting and/or frictional manner.

2. Apparatus (10) according to claim 1, **characterised in that** the safety valve (17) is configured as a 3/2 valve, the safety valve (17) comprising an air inlet (18) for feeding compressed air into the safety valve (17), an air outlet (19) for releasing compressed air from the safety valve (17) and a supply inlet (20) for supplying compressed air to the or each tool (15).

3. Apparatus (10) according to claim 1 or claim 2, **characterised in that** the safety valve (17) comprises a hollow cylinder (21) having a cavity (22) in which a push rod (23) is guided in a sliding manner, the hollow cylinder (21) being configured in a closed manner at one end face (24) and in an open manner at the opposite end face (25) in such a way that the push rod (23) protrudes out of the hollow cylinder (21) at the open end face (25).

4. Apparatus (10) according to claim 3, **characterised in that** the push rod (23) is inherently arranged with its outside circumference (33) at a distance from an inner wall (34) of the hollow cylinder (21) in order to form air chambers (32), the push rod (23) comprising at least three sealing members (35) by which the push rod (23) abuts the inner wall (34) of the hollow cylinder (21) in a sealing manner.

5. Apparatus (10) according to claim 3 or claim 4, **characterised in that** the air inlet (18), the air outlet (19) and the supply inlet (20) open into the cavity (22) in the hollow cylinder (21), the establishment of flow connections between the air inlet (18) and/or air outlet (19) and/or supply inlet (20) being able to be varied by means of the movable push rod (23).

6. Apparatus (10) according to one or more of claims 3 to 5, **characterised in that** the cover (14) is assigned an actuation lever (37), which comprises a cam disc (38) that is operatively connected to the push rod (23), which is assigned to the safety valve (17).

7. Apparatus (10) according to claim 6, **characterised in that** the push rod (23) is configured and adapted to be movable, by means of the cam disc (38), out of a work position, in which the cover (14) is closed and the push rod (23) on the first hand ensures a flow connection between the air inlet (18) and the supply inlet (20) and on the other hand blocks the air outlet (19), into a stop position, in which the cover (14) is opened and the push rod (23) on the one hand ensures a flow connection between the supply inlet (20) and the air outlet (19) and on the other hand blocks the air inlet (18), and back again.

8. Apparatus (10) according to claim 6 or claim 7, **characterised in that** the cam disc (38), as a closed cam disc (38), is configured and adapted for producing a constant form-fitting and/or frictional manner with the push rod (23) in order to switch the safety valve (17).

9. Apparatus (10) according to one or more of claims 6 to 8, **characterised in that**, at a free end of the push rod (23), said free end projecting out of the hollow cylinder (21), a connecting bolt (41) is arranged, which is guided in a closed curved path (40) of the cam disc (38).

10. Apparatus (10) according to one or more of claims 3 to 9, **characterised in that** the air inlet (18) and the air outlet (19) are arranged one behind the other in the longitudinal direction of the hollow cylinder (21), the air outlet (19) being arranged closer to the open end face (25) of the hollow cylinder (21).

11. Apparatus (10) according to one or more of claims 2 to 10, **characterised in that** the air inlet (18) and the air outlet (19) are arranged at a distance from one another in the longitudinal direction of the hollow cylinder (21), the distance being large enough so that the supply inlet (20) is arranged and configured between the air inlet (18) and the air outlet (19).

12. Apparatus (10) according to one or more of claims 2 to 11, **characterised in that** the air inlet (18) and the air outlet (19) on the one hand and the supply inlet (20) on the other hand are arranged on opposite sides of the hollow cylinder (21) when viewed radially.

13. Apparatus (10) according to one or more of claims 7 to 12, **characterised in that** a spring element (43) is assigned to the safety valve (17), the spring element (43) being adapted and arranged such that, using a spring force, it pushes the push rod (23) inwards into the hollow cylinder (21) in the direction of the stop position.

14. Apparatus (10) according to claim 13, **characterised in that** a compression spring (44) is arranged in the region of the open end face (25) of the hollow cylinder (21) and abuts a projection (45) on the push rod (23) in such a way that a constant spring pressure is applied to the push rod (23) in the direction of the closed end face (24) of the hollow cylinder (21).

15. Apparatus (10) according to one or more of claims 7 to 14, **characterised in that**, in the work position within an air chamber (32) in the flow connection between the air inlet (18) and the supply inlet (20), an air pressure is applied that subjects the push rod (23) to a pressure force that is directed inwards into the hollow cylinder (21) in the direction of the stop position.

## Revendications

1. Dispositif (10), configuré et adapté pour le traitement et/ou la transformation de produits, comprenant un boîtier (11) avec un espace de travail (12) pour recevoir au moins un poste de traitement (13), au moins un poste de traitement (13) à l'intérieur de l'espace de travail (12), un capot de recouvrement mobile (14) pour ouvrir et fermer le boîtier (11) et recouvrir l'espace de travail (12) par rapport à l'environnement (U), le ou chaque poste de travail (13) comprenant au moins un outil (15) actionnable pneumatiquement et l'outil (15) et le capot de recouvrement mobile (14) étant en liaison active au moyen d'un appareil de sécurité (16), de telle sorte que l'ouverture du capot de recouvrement (14) conduit obligatoirement à la mise hors service de l'outil (15), **caractérisé en ce que** l'appareil de sécurité (16) comprend une soupape de sécurité (17) qui est configurée de manière à pouvoir être commutée exclusivement mécaniquement et qui, à cet effet, est en liaison active avec le capot de recouvrement (14) au moins par complémentarité de forme et/ou par adhérence.

2. Dispositif (10) selon la revendication 1, **caractérisé en ce que** la soupape de sécurité (17) est configurée sous la forme d'une soupape à 3/2 voies, la soupape de sécurité (17) comprenant une entrée d'air (18) pour amener de l'air comprimé dans la soupape de sécurité (17), une sortie d'air (19) pour évacuer l'air comprimé de la soupape de sécurité (17) et une entrée d'alimentation (20) pour alimenter le ou chaque outil (15) en air comprimé.

3. Dispositif (10) selon la revendication 1 ou 2, **caractérisé en ce que** la soupape de sécurité (17) comprend un cylindre creux (21) avec une cavité (22) dans laquelle une tige de poussée (23) est guidée de manière coulissante, le cylindre creux (21) étant configuré sous forme fermée sur un côté frontal (24) et sous forme ouverte sur le côté frontal opposé (25), de telle sorte que la tige de poussée (23) fait saillie hors du cylindre creux (21) sur le côté frontal ouvert (25).

4. Dispositif (10) selon la revendication 3, **caractérisé en ce que** la tige de poussée (23) est agencée pour former des chambres à air (32) avec sa surface périphérique (33) fondamentalement à distance d'une paroi intérieure (34) du cylindre creux (21), la tige de poussée (23) comprenant au moins trois corps d'étanchéité (35) avec lesquels la tige de poussée (23) s'applique de manière étanche contre la paroi intérieure (34) du cylindre creux (21).

5. Dispositif (10) selon la revendication 3 ou 4, **caractérisé en ce que** l'entrée d'air (18), la sortie d'air (19) et l'entrée d'alimentation (20) débouchent dans la cavité (22) du cylindre creux (21), l'établissement de liaisons d'écoulement entre l'entrée d'air (18) et/ou la sortie d'air (19) et/ou l'entrée d'alimentation (20) étant variable au moyen de la tige de poussée mobile (23).

6. Dispositif (10) selon une ou plusieurs des revendications 3 à 5, **caractérisé en ce que** le capot de recouvrement (14) est associé à un levier d'actionnement (37) comprenant une came (38) en liaison active avec la tige de poussée (23) associée à la soupape de sécurité (17).

7. Dispositif (10) selon la revendication 6, **caractérisé en ce que** la tige de poussée (23) est configurée et adaptée pour pouvoir être déplacée, au moyen de la came (38), d'une position de travail dans laquelle le capot de recouvrement (14) est fermé et la tige de poussée (23) assure, d'une part, une liaison d'écoulement entre l'entrée d'air (18) et l'entrée d'alimentation (20) et, d'autre part, bloque la sortie d'air (19), à une position d'arrêt dans laquelle le capot de recouvrement (14) est ouvert et la tige de poussée (23), d'une part, assure une liaison d'écoulement entre l'entrée d'alimentation (20) et la sortie d'air (19) et, d'autre part, bloque l'entrée d'air (18), et inversement.

8. Dispositif (10) selon la revendication 6 ou 7, **caractérisé en ce que** la came (38) est configurée et adaptée sous forme de came fermée (38) pour établir une liaison permanente par complémentarité de forme et/ou par adhérence avec la tige de poussée (23) pour commuter la soupape de sécurité (17).

9. Dispositif (10) selon une ou plusieurs des revendications 6 à 8, **caractérisé en ce qu'**un axe de liaison (41) est agencé à une extrémité libre de la tige de poussée (23) dépassant du cylindre creux (21), lequel axe est guidé dans un chemin de came fermé (40) de la came (38).

10. Dispositif (10) selon une ou plusieurs des revendications 3 à 9, **caractérisé en ce que** l'entrée d'air (18) et la sortie d'air (19) sont agencées l'une derrière l'autre dans la direction longitudinale du cylindre creux (21), la sortie d'air (19) étant agencée plus près du côté frontal ouvert (25) du cylindre creux (21).

11. Dispositif (10) selon une ou plusieurs des revendications 2 à 10, **caractérisé en ce que** l'entrée d'air (18) et la sortie d'air (19) sont espacées l'une de l'autre dans la direction longitudinale du cylindre creux (21), l'espacement étant suffisamment grand pour que l'entrée d'alimentation (20) soit agencée et configurée entre l'entrée d'air (18) et la sortie d'air (19).

12. Dispositif (10) selon une ou plusieurs des revendications 2 à 11, **caractérisé en ce que** l'entrée d'air (18) et la sortie d'air (19) d'une part, et l'entrée d'alimentation (20) d'autre part, sont agencées radialement sur des côtés opposés du cylindre creux (21).

13. Dispositif (10) selon une ou plusieurs des revendications 7 à 12, **caractérisé en ce qu'**un élément à ressort (43) est associé à la soupape de sécurité (17), l'élément à ressort (43) étant adapté et agencé de manière à presser la tige de poussée (23) vers l'intérieur du cylindre creux (21) en direction de la position d'arrêt avec une force de ressort.

14. Dispositif (10) selon la revendication 13, **caractérisé en ce que** dans la zone du côté frontal ouvert (25) du cylindre creux (21) est agencé un ressort de compression (44) qui s'applique sur une saillie (45) de la tige de poussée (23), de telle sorte qu'une pression de ressort permanente s'applique sur la tige de poussée (23) en direction du côté frontal fermé (24) du cylindre creux (21).

15. Dispositif (10) selon une ou plusieurs des revendications 7 à 14, **caractérisé en ce que**, dans la position de travail, une pression d'air est appliquée à l'intérieur d'une chambre à air (32) dans la liaison d'écoulement entre l'entrée d'air (18) et l'entrée d'alimentation (20), qui sollicite la tige de poussée (23) avec une force de compression qui est dirigée vers l'intérieur du cylindre creux (21) en direction de la position d'arrêt.
